# EUROPÄISCHE PATENTSCHRIFT

(11) **EP 0 821 701 B1**
(45) Veröffentlichungstag und Bekanntmachung des Hinweises auf die Patenterteilung: **02.06.1999**
(21) Anmeldenummer: 96908121.5
(22) Anmeldetag: 22.03.1996
(51) Int. Cl.: C08F 36/04, C08F 4/52

(54) **NEUER KATALYSATOR FÜR DIE GASPHASENPOLYMERISATION VON KONJUGIERTEN DIENEN**
NOVEL CATALYST FOR THE GAS-PHASE POLYMERISATION OF CONJUGATED DIENES
NOUVEAU CATALYSEUR POUR POLYMERISATION EN PHASE GAZEUSE DE DIENES CONJUGUES

(30) Priorität: 04.04.1995 DE 19512127
(43) Veröffentlichungstag der Anmeldung: 04.02.1998
(73) Patentinhaber: BAYER AG, 51368 Leverkusen (DE)
(72) Erfinder: REICHERT, Karl-Heinz, D-14055 Berlin (DE); MARQUARDT, Peter, D-13627 Berlin (DE); EBERSTEIN, Christopher, D-12163 Berlin (DE); GARMATTER, Birgit, D-14482 Potsdam (DE); SYLVESTER, Gerd, D-51375 Leverkusen (DE)
(86) Internationale Anmeldenummer: EP9601275
(87) Internationale Veröffentlichungsnummer: WO9631543

(56) Entgegenhaltungen:
- EP-A- 0 647 657
- MAKROMOLEKULARE CHEMIE, MACROMOLECULAR SYMPOSIA, Bd. 66, 1.Februar 1993, Seiten 231-243, XP000360506 LIDO PORRI ET AL: "RECENT ADVANCES IN THE FIELD OF DIOLEFIN POLYMERIZATION WITH TRANSITION METAL CATALYSTS"

## Beschreibung

Die Erfindung betrifft einen neuen Katalysator, dessen Herstellung sowie seine Verwendung zur Polymerisation von konjugierten Dienen, insbesondere Butadien, in der Gasphase.

Polybutadien mit einem hohen Anteil an cis-1,4-Einheiten wird seit längerer Zeit in großtechnischem Maßstab produziert und für die Herstellung von Reifen und anderen Gummiwaren verwendet. Die Polymerisation wird dabei in flüssiger Phase unter Verwendung der verschiedensten Katalysatorsysteme durchgeführt. Ein besonders vorteilhaftes Katalysatorsystem zur Herstellung von Polybutadien mit einem hohen Anteil an cis-1,4-Einheiten wird in der Europäischen Patentschrift 11 184 beschrieben. Das dort beschriebene und zur Polymerisation von Butadien in Lösung verwendete Katalysatorsystem besteht aus einem Carboxylat der Seltenen Erden, einem Aluminiumtrialkyl und/oder Alkylaluminiumhydrid und einer weiteren Lewis-Säure.

Macromolecular Symposia, 66 (1993), S. 231- 143 offenbart einen Katalysator aus einem Neodyniumcarboxylat und einem Aluminoxan für die Polymerisation von Butadien in Lösung, der Katalysator wird jedoch nicht geträgert.

Die Polymerisation von konjugierten Dienen in Lösung hat den Nachteil, daß bei der Abtrennung des nicht umgesetzten Monomeren und des Lösungsmittels vom gebildeten Polymeren niedermolekulare Verbindungen über Abluft und Abwasser in die Umwelt gelangen können und deshalb entsprechend entsorgt werden müssen.

Es ist auch bekannt, die Polymerisation von konjugierten Dienen ohne Zusatz von Lösungsmitteln in den flüssigen Monomeren durchzuführen. Ein solches Verfahren hat jedoch den Nachteil, daß bei der vollständigen Polymerisation eine große Wärmemenge frei wird, die schwer zu regulieren ist und deshalb ein gewisses Gefahrenpotential darstellt. Außerdem treten sehr hohe Viskositäten auf, die spezielle Apparaturen erforderlich machen. Auch hier treten bei der Abtrennung der Polymeren von den Monomeren Belastungen für die Umwelt auf.

In den letzten Jahren hat sich zur Herstellung insbesondere von Polyethylen und Polypropylen das Gasphasenverfahren als besonders vorteilhaft erwiesen und technisch durchgesetzt. Die umweltrelevanten Vorteile des Gasphasenverfahren beruhen insbesondere darauf, daß keine Lösungsmittel eingesetzt werden und Emissionen und Abwasserbelastungen verringert werden können.

Bisher ist kein Verfahren bekannt, die Polymerisation von konjugierten Dienen, insbesondere von Butadien zu Polymeren mit hohem cis-Gehalt, direkt aus der Gasphase durchzuführen. Ein Grund mag darin liegen, daß die für die Lösungspolymerisation von konjugierten Dienen verwendeten Ziegler-Natta-Katalysatoren auf Basis von Titan, Kobalt, Nickel oder Neodym nicht ohne weiteres für die Polymerisation in der Gasphase geeignet sind, insbesondere aufgrund der geringen Produktivität, d.h. der geringen Menge an Polymer, die sich mit einer bestimmten Menge Katalysator herstellen läßt. So ist der in EP 11 184 beschriebene Katalysator aufgrund seiner nach kurzer Zeit stark abfallenden Aktivität bei einer Gasphasenpolymerisation praktisch nicht geeignet, konjugierte Diene, insbesondere Butadien, in der Gasphase zu Polymeren mit einem hohen Anteil an cis-1,4-Einheiten zu polymerisieren (siehe Vergleichsversuch).

In der Deutschen Patentanmeldung P 43 34 045 wurde ein Katalysatorsystem beschrieben, das die Polymerisation von konjugierten Dienen, insbesondere Butadien, in der Gasphase in technisch relevanten Ausbeuten ermöglicht, jedoch noch verbesserungswürdig ist.

Aufgabe der vorliegenden Erfindung ist es, verbesserte Katalysatoren für die Polymerisation von konjugierten Dienen, insbesondere Butadien, in der Gasphase zur Verfügung zu stellen, die es ermöglichen, in guten Ausbeuten Polybutadien mit einem hohen Anteil an cis-1,4-Einheiten herzustellen, gekoppelt mit einem hohen Molekulargewicht.

Gegenstand der vorliegenden Erfindung ist somit ein Katalysator bestehend aus
A) einem Alkoholat der Seltenen Erden (I), einem Carboxylat der Seltenen Erden (II) und/oder einer Komplexverbindung der Seltenen Erden mit Diketonen (III) der folgenden Formeln: 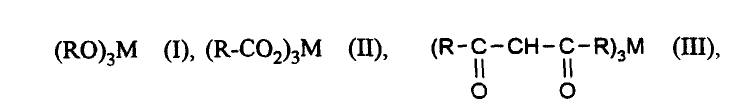
B) einem Alumoxan der Formeln (IV) bis (V): 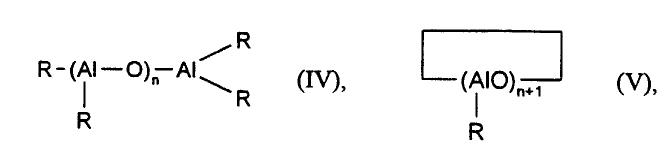 wobei in den Formeln
   - M: ein dreiwertiges Element der Seltenen Erden mit den Ordnungszahlen 57 bis 71 bedeutet,
   - R: gleich oder verschieden ist und Alkylreste mit 1 bis 20 Kohlenstoffatomen bedeutet und
   - n: 1 bis 50 bedeutet,
   und
C) einem inerten, teilchenförmigen, anorganischen Feststoff mit einer spezifischen Oberfläche größer als 10 m²/g (BET) und einem Porenvolumen von 0,30 bis 15 ml/g, wobei das Molverhältnis der Komponente A) zu Komponente B) 1:1 bis 1:50000 beträgt und auf 100 g der Komponente C) 0,1 mmol bis 1 Mol der Komponente A) eingesetzt werden.

In der Komponente A) des Katalysators bedeutet M ein dreiwertiges Element der Seltenen Erden mit den im Periodensystem gekennzeichneten Ordnungszahlen 57 bis 71.

Bevorzugt sind insbesondere solche Verbindungen, in denen M Lanthan, Cer, Praseodym oder Neodym oder ein Gemisch von Elementen der Seltenen Erden, welches mindestens eines der Elemente Lanthan, Cer, Praseodym oder Neodym zu wenigstens 10 Gew.-% enthält, bedeutet. Ganz besonders bevorzugt sind Verbindungen, in denen M Lanthan oder Neodym oder ein Gemisch von Seltenen Erden, welches Lanthan oder Neodym zu mindestens 30 Gew.-% enthält, bedeutet.

Als Reste R in den Formeln (I) bis (III) sind insbesondere geradkettige oder verzweigte Alkylreste mit 1 bis 20 Kohlenstoffatomen, bevorzugt 1 bis 15 Kohlenstoffatomen, zu nennen, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl, neo-Dodecyl.

Als Alkoholate der Komponente A) werden z.B. genannt:
Neodym(III)-n-propanolat, Neodym(III)-n-butanolat, Neodym(III)-n-Decanolat, Neodym(III)-iso-propanolat, Neodym(III)-2-ethyl-hexanolat, Praseodym(III)-n-propanolat, Praseodyl(III)-n-butanolat, Praseodym(III)-n-decanolat, Praseodyl(III)-iso-propanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodyl(III)-n-decanolat, Neodyl(III)-2-ethyl-hexanolat.

Als Carboxylate der Komponente A) sind geeignet:
Lanthan(III)-propionat, Lanthan(III)-diethylacetat, Lanthan(III)-2-ethylhexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, PraseodylmIII)-cyclohexancar-boxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt ist Neodymversatat.

Als Komplexverbindungen der Komponente A) seien genannt:
Lanthan(III)-acetylacetonat, Praseodyl(III)-acetylacetonat, Neodyl(III)-acetylacetonat, bevorzugt Neodym(III)-acetylacetonat.

Die Verbindungen der Seltenen Erden können einzeln oder im Gemisch untereinander eingesetzt werden.

Ganz besonders bevorzugt werden Neodymversatat, Neodymoctanoat und/oder Neodymnaphthenat als Komponente A) eingesetzt.

Als Beispiele für Alumoxane (IV) und (V) werden genannt: Methylalumoxan, Ethylalumoxan und iso-Butylalumoxan, bevorzugt Methylalumoxan und iso-Butylalumoxan.

Als Komponente C) werden inerte, teilchenförmige, anorganische Feststoffe mit einer spezifischen Oberfläche größer als 10, bevorzugt 10 bis 1000 m²/g (BET) und einem Porenvolumen von 0,3 bis 15, bevorzugt von 0,5 bis 12 ml/g eingesetzt.

Die spezifische Oberfläche (BET) wird in üblicher Weise bestimmt nach S. Brunauer, P.H. Emmet und Teller, J. Amer. Chem. Soc. 60 (2), 309 (1938), das Porenvolumen wird bestimmt durch die Zentrifugationsmethode nach M. McDaniel, J. Colloid Interface Sci. 78, 31 (1980).

Als inerte, anorganische Feststoffe eignen sich insbesondere Silicagele, Tone, Alumosilikate, Talkum, Zeolithe, Ruß, anorganische Oxide, wie Siliciumdioxid, Aluminiumoxid, Magnesiumoxid, Titandioxid, Siliciumcarbid, bevorzugt Silicagele, Zeolithe und Ruß, besonders bevorzugt Silicagel. Unter inert wird in diesem Fall verstanden, daß die Feststoffe weder eine reaktive Oberfläche aufweisen noch absorbiertes Material enthalten, die die Bildung eines aktiven Katalysators verhindern oder mit den Monomeren reagieren.

Die genannten inerten, anorganischen Feststoffe, die der obengenannten Spezifikation genügen und deshalb für den Einsatz geeignet sind, werden beispielsweise näher beschrieben in Ullmanns, Encyclopädie der technischen Chemie, Band 21, S. 439 ff. (Silicagele), Band 23, S. 311 ff. (Tone), Band 14, S. 633 ff. (Ruße), Band 23, S. 575 ff. und Band 17, S. 9 ff. (Zeolithe).

Die anorganischen Feststoffe können einzeln oder im Gemisch untereinander eingesetzt werden.

Das Molverhältnis, in denen die Katalysatorkomponenten A) bis C) eingesetzt werden, kann in weiten Grenzen variiert werden.

Das Molverhältnis der Komponente A) zu Komponente B) beträgt bevorzugt 1:3 bis 1:2000, besonders bevorzugt 1:3 bis 1:1000. Auf 100 g der Komponente C) werden bevorzugt 1 bis 200 mmol der Komponente A) eingesetzt.

Es ist auch möglich, den Katalysatorkomponenten A) bis C) noch eine weitere Komponente D zuzusetzen. Diese Komponente D) ist ein konjugiertes Dien, das das gleiche Dien sein kann, das später mit dem Katalysator polymerisiert werden soll. Bevorzugt werden verwendet Butadien und Isopren.

Wird die Komponente D) dem Katalysator zugesetzt, so beträgt die Menge an D) bevorzugt 0,1 bis 100 Mol, bezogen auf 1 Mol der Komponente A), besonders bevorzugt 0,1 bis 10 Mol, bezogen auf 1 Mol der Komponente A). Ganz besonders bevorzugt werden 0,5 bis 5 Mol, bezogen auf 1 Mol der Komponente A), an D) eingesetzt.

Werden die Komponenten A), B) oder C) in Form eines Gemisches der verschiedenen Teilkomponenten von A), B) oder C) eingesetzt, so kann die Menge der eingesetzten Teilkomponenten beliebig variiert werden. Die günstigste Mischungsmenge der Teilkomponenten kann leicht durch entsprechende Vorversuche ermittelt werden.

Ein weiterer Gegenstand der Erfindung ist die Herstellung des zuvor beschriebenen Katalysatorsystems. Dieses wird hergestellt, indem man die Komponenten A) bis D) in einem inerten Lösungs- und/oder Verdünnungsmittel mischt und das Lösungs- bzw. Verdünnungsmittel nach der gewünschten Zeit destillativ, gegebenenfalls im Vakuum, abtrennt.

Als inerte Lösungs- und/oder Verdünnungsmittel können aliphatische, cycloaliphatische und/oder aromatische Lösungsmittel, wie z.B. Pentan, Hexan, Heptan, Cyclohexan, Benzol und/oder Toluol eingesetzt werden.

Die Reihenfolge, in der die Komponenten A) bis D) und das inerte Lösungsmittel zum Reaktionsansatz gegeben werden, ist beliebig, wenn sie auch einen gewissen Einfluß auf die Eigenschaften des resultierenden Katalysators ausübt. Man kann z.B. die Komponente C) in dem inerten Lösungsmittel aufschlämmen, anschließend die Komponente B) dazugeben, dann A) und schließlich D) zugeben. Es ist auch möglich, zwischen der Zugabe der einzelnen Komponenten das inerte Lösungs- bzw. Verdünnungsmittel abzudestillieren, bevor eine weitere Komponente, gegebenenfalls in einem Lösungsmittel, zugegeben wird. Die einzelnen Komponenten können auch aufgeteilt werden und die Teile zu verschiedenen Zeiten zum Katalysatoransatz gegeben werden. Eine bevorzugte Ausführungsform besteht beispielsweise darin, die Komponente C) mit der Komponente B) in einem inerten Lösungs- oder Verdünnungsmittel zu behandeln und anschließend die Komponente A) und gegebenenfalls D) zuzugeben.

Die Menge des eingesetzten inerten Lösungs- und/oder Verdünnungsmittels kann in weiten Grenzen variiert werden. Aus ökonomischen Gründen wird man die Menge möglichst gering halten. Die minimale Menge richtet sich nach der Menge und der Löslichkeit der einzelnen Komponenten sowie dem Porenvolumen der Komponente C). Bevorzugt wird eine Menge von 10 bis 2000 Teilen des Lösungs- und/oder Verdünnungsmittels, bezogen auf 100 Teile der Komponente C), eingesetzt.

Die Herstellung des Katalysators kann in einem weiten Temperaturbereich erfolgen. Im allgemeinen liegt die Temperatur zwischen dem Schmelzpunkt und dem Siedepunkt des inerten Verdünnungs- und/oder Lösungsmittels. Üblicherweise wird bei Temperaturen von -20 bis 80°C gearbeitet.

Die Erfindung betrifft auch die Verwendung der erfindungsgemäßen Katalysatoren zur Polymerisation von gasförmigen konjugierten Dienen, z.B. von 1,3-Butadien, Isopren, Pentadien oder Dimethylbutadien.

Die Polymerisation erfolgt, indem man das gasförmige konjugierte Dien mit dem beschriebenen Katalysator in Berührung bringt. Dem gasförmigen Monomeren können weitere Gase zugemischt werden, die entweder der Verdünnung oder der Wärmeabführung oder der Regelung des Molekulargewichtes dienen. Die Polymerisation kann bei Drücken von 1 mbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 200°C, durchgeführt.

Die Polymerisation kann in jeder für eine Gasphasenpolymerisation geeigneten Apparatur bewerkstelligt werden. So kann z.B. ein Rührreaktor, ein Drehreaktor oder ein Fließbettreaktor oder eine Kombination dieser Reaktortypen verwendet werden. Um ein Verkleben zu vermeiden, kann der Zusatz von bekannten Pudermitteln hilfreich sein. Als Pudermittel können alle inerten, feinkörnigen Feststoffe eingesetzt werden, insbesondere auch die als Komponente C) beschriebenen inerten, anorganischen Feststoffe.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden.

Üblicherweise werden durch Gasphasenpolymerisation mit dem erfindungsgemäßen Katalysatorsystem sehr hochmolekulare Polymere hergestellt, die durch Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können in bekannter Weise compoundiert und vulkanisiert werden.

In einer gängigen Ausführungsform wird bei der Polymerisation von 1,3-Butadien wie folgt verfahren:

Der aus den Komponenten A) bis C) und gegebenenfalls D) bestehende Katalysator wird in eine Apparatur überführt, die geeignet ist, den pulverförmigen Katalysator in Bewegung zu halten. Das kann z.B. durch Rühren, Drehen und/oder durch einen Gasstrom erfolgen. Das zunächst im Gasraum befindliche inerte Gas, z.B. Stickstoff, wird durch das gasförmige Monomere ersetzt. Dabei setzt eine sofortige Polymerisation ein und die Temperatur steigt an. Das Monomere wird, gegebenenfalls verdünnt mit einem Inertgas, so schnell dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator deaktiviert und das Polymere mit bekannten Alterungsschutzmitteln behandelt.

Die nachfolgenden Beispiele sollen die vorliegend beschriebene Erfindung verdeutlichen, ohne diese jedoch auf diese Beispiele einzuschränken.

### Beispiele

### Beispiel 1

a) Vorbehandlung des Trägers:
   Als Träger wurde Vulkasil S verwendet. Vulkasil ist ein Silicagel der Bayer AG mit einer Oberfläche nach BET von 230 m²/g. Das Porenvolumen beträgt 2,95 ml/g. Vor dem Einsatz war das Vulkasil S 2 Stunden bei 250°C getrocknet worden.
b) Herstellung des Katalysators:
   Ein Katalysator wurde hergestellt, indem in einem 1 l-Kolben, ausgerüstet mit einer N₂-Zuführung und einem Magnetrührer, 800 mmol Methylalumoxan (MAO), gelöst in 600 ml Toluol und 3,0 mmol Neodymversatat (NDV), gelöst in 10 ml Cyclohexan, zusammengegeben wurden. Das resultierende Gemisch wurde zu 50 g des unter a) beschriebenen Trägers gegeben. Der Ansatz wurde über Nacht bei Raumtemperatur gerührt und dann im Vakuum zur Trockne eingedampft. Es wurden 100,6 g eines frei fließenden Pulvers isoliert.
c) Polymerisation:
   Die Polymerisation wurde in einem Rotationsverdampfer, der mit einem Magnetrührstab, einem Quecksilber-Überdruckventil und Anschlüssen zu einer Vakuumpumpe und zur Versorgung mit gasförmigem Stickstoff und Butadien sowie einem bis fast auf den Boden des 1 1-Kolbens reichenden Thermofühler ausgerüstet war, durchgeführt. Die Neigung des Roationsverdampfers wurde so eingestellt, daß die Drehachse mit der des Stabmagneten einen Winkel von 45° bildete. Das gesamte Volumen der Apparatur betrug 1,45 Liter. In den Kolben wurden 9,6 g des Katalysators unter Stickstoff eingefüllt. Die Apparatur wurde auf 1 mbar evakuiert und unter Rühren und Drehen mit gasförmigem, trockenem Butadien bis zu einem Druck von 1000 mbar gefüllt und bei einem Druck zwischen 950 und 1000 mbar gehalten. Die Temperatur stieg innerhalb von 30 Minuten auf 125°C. Die Butadienzufuhr wurde für 10 Minuten unterbrochen. Dabei sank der Druck auf 700 mbar und die Innentemperatur auf 102°C. Im weiteren Verlauf des Versuches wurde ein Butadiendruck von 950 bis 1000 mbar aufrechterhalten und die Innentemperatur mittels eines temperierbaren Gebläses auf 115°C eingestellt. Nach 1,5 Stunden waren 97 g Butadien verbraucht worden.

Nach 6,5 Stunden wurde die Apparatur evakuiert, mit N₂ aufgefüllt und das entstandene grobkörnige Produkt aus dem Kolben genommen. Das Gewicht betrug 217,7 g. Das Produkt wurde auf der Walze mit 2 g Stearinsäure und 2 g Vulkanox BKF der Bayer AG abgestoppt und stabilisiert.

In einem Kneter der Fa. Haake mit einem Volumen von 50 ml wurden 33,6 g des Polybutadiens bei einer Temperatur von 10°C mit 13,3 g eines hocharomatischen Strecköls (Purcell, Fa. Stinnes) geknetet. Die Drehzahl der Rotoren betrug 50 Upm. Nach 25 Minuten wurde das ölverstreckte Polybutadien aus dem Kneter entfernt, 24 Stunden bei Raumtemperatur gelagert und anschließend die Mooneyviskosität (ML-1+4', 100°C) zu 138 ME bestimmt.
Gehalt an cis-1,4-Doppelbindungen: 93 %.

### Beispiel 2

### Polymerisation:

Es wurden 8,2 g des in Beispiel 1 beschriebenen Katalysators zur Gasphasenpolymerisation von Butadien eingesetzt. Die Polymerisation wurde wie in Beispiel 1 beschrieben durchgeführt, mit dem Unterschied, daß die Temperatur zwischen 50 und 80°C gehalten wurde. Die Ausbeute betrug 88,1 g nach einer Reaktionszeit von 4,5 Stunden.

33 g dieses Produktes wurden in einem Haake-Kneter mit einem Innenvolumen von 50 ml gefüllt und bei einer Drehzahl von 50 Upm mit 13 g eines aromatischen Mineralöls (Purcell, Fa. Stinnes) 30 Minuten geknetet. Das so entstandene Produkt wurde auf einem Walzwerk weiter kompaktiert und die Mooneyviskosität gemessen. Die Mooneyviskosität des ölverstreckten Polybutadiens betrug 92 ME.

### Beispiel 3

In einem ausgeheizten 2-Halskolben wurden 0,41 g Silicagel (Grace Type 360, Code 45), das eine BET-Oberfläche von 360 m²/g aufweist, mit 60 ml MAO (10 %ige Lösung in Toluol 10 Minuten unter einer Stickstoffatmosphäre gerührt.

Anschließend wurden 0,86 g NDV-Lösung (33 Gew.-% in Cyclohexan) zugegeben und weitere 2 Stunden gerührt. Danach wurden die Lösungsmittel bei 50°C/1 mbar abdestilliert und der Rückstand bei 50°C/10⁻³ mbar getrocknet. Es wurden 6,03 g eines frei fließenden Pulvers erhalten.

### Polymerisation:

Die Polymerisation wurde in einem waagerecht liegenden Drehrohrreaktor mit 300 ml Volumen durchgeführt. Der Reaktor wurde mit 0,5 g des Katalysators beschickt, auf 50°C aufgeheizt und mit 50 UpM gedreht. Dann wurden 2,8 bar Butadien aufgedrückt. Nach 11 Minuten war der Druck auf 0,9 bar abgefallen.

Es wurden erneut 2,8 bar Butadien aufgedrückt. Nach 16 Minuten war der Druck auf 1 bar abgefallen. Es wurden erneut 2,8 bar Butadien aufgedrückt. Nach 20 Minuten war der Druck auf 1 bar abgefallen.

Nach einer Polymerisationszeit von insgesamt 38 Minuten wurde der Reaktor evakuiert, mit Stickstoff gefüllt und geöffnet. Es hatten sich 17,7 g eines weißen, grobkörnigen Feststoffes gebildet. Das entspricht einer Aktivität von 8750 Mol Butadien/Mol Nd/h.

Das gebildete Produkt wurde 30 Minuten mit 100 ml Aceton, in dem 100 mg Vulkanox BKF gelöst waren, gerührt und anschließend zur Trockne eingedampft.

### Vergleichsbeispiel

a) Herstellung des Katalysators:
   Ein Katalysator wurde hergestellt, indem in einem 1 l-Kolben, ausgerüstet mit einer N₂-Zuführung und einem Magnetrührer, 120 ml trockenes n-Hexan, 15 mmol DIBAH und 0,5 mmol Ethylaluminiumsesquichlorid (EASC) vermischt wurden. Nachdem 0,25 g Butadien in die Lösung eingeleitet worden waren, wurden 0,5 mmol Neodymversatat (NVD) zugegeben. Das resultierende Gemisch wurde nach 5 Minuten im Vakuum bei Raumtemperatur eingedampft. Die Ausbeute betrug 2,9 g.
c) Polymerisation:
   Die Polymerisation wurde in einem Rotationsverdampfer, wie in Beispiel 1 beschrieben, durchgeführt. Der bei der Herstellung des Katalysators verwendete Kolben wurde unter Stickstoff an die Apparatur angeschlossen. Die Apparatur wurde auf 1 mbar evakuiert und unter Rühren und Drehen mit gasförmigem, trockenen Butadien gefüllt.
   Im Kolben bildete sich an der Wand eine schmierige Masse. Die Temperatur stieg innerhalb von 2 Minuten auf 59°C. Dabei verminderte sich der Druck von 1 000 auf 920 mbar. Es wurde erneut Butadien bis zu einem Druck von 1 000 bar zugegeben. Die Butadienaufnahme war sehr langsam. Wenn der Druck auf 930 mbar abgefallen war, wurde jeweils Butadien bis zu einem Druck von 1 000 mbar gasförmig zugegeben. Nach einer Stunde hatte sich ein weicher Polymerklumpen gebildet. Es wurde kein weiteres Butadien aufgenommen.

Die Ausbeute betrug 11,3 g.

## Patentansprüche

1. Katalysator bestehend aus
A) einem Alkoholat der Seltenen Erden (I), einem Carboxylat der Seltenen Erden (II) und/oder einer Komplexverbindung der Seltenen Erden mit Diketonen (III) der folgenden Formeln: 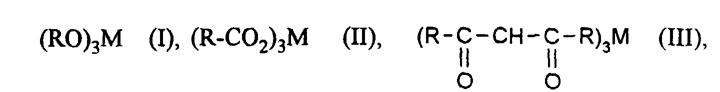
B) einem Alumoxan der Formeln (IV) bis (V): 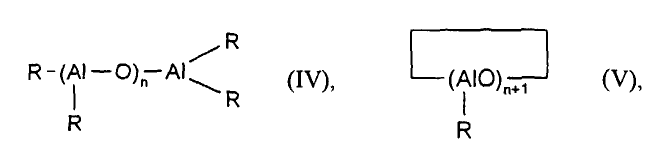 wobei in den Formeln
M ein dreiwertiges Element der Seltenen Erden mit den Ordnungszahlen 57 bis 71 bedeutet,
R gleich oder verschieden ist und Alkylreste mit 1 bis 20 Kohlenstoffatomen bedeutet und
n 1 bis 50 bedeutet,
und
C) einem inerten, teilchenförrnigen, anorganischen Feststoff mit einer spezifischen Oberfläche größer als 10 m²/g (BET) und einem Porenvolumen von 0,30 bis 15 ml/g, wobei das Molverhältnis der Komponente A) zu Komponente B) 1:1 bis 1:50000 beträgt und auf 100 g der Komponente C) 0,1 mmol bis 1 Mol der Komponente A) eingesetzt werden.

2. Katalysator nach Anspruch 1, dadurch gekennzeichnet, daß er als Komponente D) zusätzlich ein konjugiertes Dien in einer Menge von 0,1 bis 100 Mol, bezogen auf 1 Mol der Komponente A), enthält.

3. Verfahren zur Herstellung eines Katalysators gemäß Ansprüchen 1 und 2, dadurch gekennzeichnet, daß man die Komponenten A) bis D) des in Ansprüchen 1 und 2 beschriebenen Katalysators in einem inerten, organischen Lösungs- und/oder Verdünnungsmittels bei Temperaturen von -20 bis 80°C in beliebiger Reihenfolge mischt und anschließend das eingesetzte Lösungs- und/oder Verdünnungsmittel in geeigneter Weise abtrennt.

4. Verwendung des Katalysators nach Ansprüchen 1 bis 3 zur Polymerisation von konjugierten Dienen in der Gasphase.

## Claims

1. Catalyst consisting of
A) a rare earth alkoxide (I), a rare earth carboxylate (II) and/or a rare earth coordination compound-with diketones (III) of the following formulae: 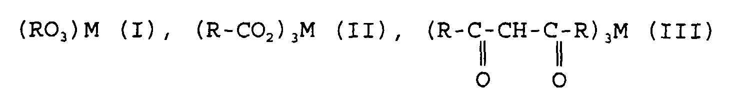
B) an alumoxane of the formulae (IV) to (V): 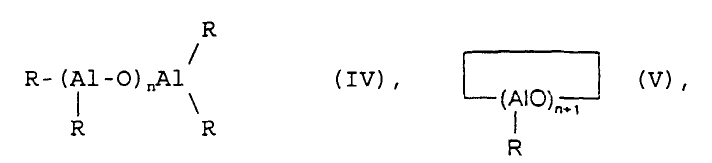 wherein, in the formulae,
M means a trivalent rare earth element with an atomic number of 57 to 71,
R is identical or different and means alkyl residues with 1 to 20 carbon atoms and
n means 1 to 50,
and
C) an inert, particulate, inorganic solid with a specific surface area of greater than 10 m²/g (BET) and a pore volume of 0.30 to 15 ml/g, wherein the molar ratio of component A) to component B) is 1:1 to 1:50000 and 0.1 mmol to 1 mol of component A) are used per 100 g of component C).

2. Catalyst according to claim 1, characterised in that it additionally contains as component D) a conjugated diene in a quantity of 0.1 to 100 mol relative to 1 mol of component A).

3. Process for the production of a catalyst according to claims 1 and 2, characterised in that components A) to D) of the catalyst described in claims 1 and 2 are mixed in any desired sequence in an inert, organic solvent and/or diluent at temperatures of -20 to 80°C and the solvent and/or diluent used is then separated in a suitable manner.

4. Use of the catalyst according to claims 1 to 3 for the polymerisation of conjugated dienes in the gas phase.

## Revendications

1. Catalyseur consistant en
A) un alcoolate des terres rares (I), un carboxylate des terres rares (II) et/ou un complexe des terres rares et de dicétones (III) répondant aux formules respectives : 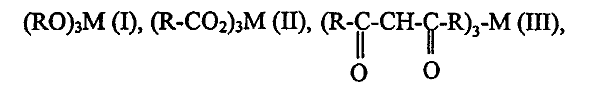
B) un alumoxane de formule (IV) ou (V): 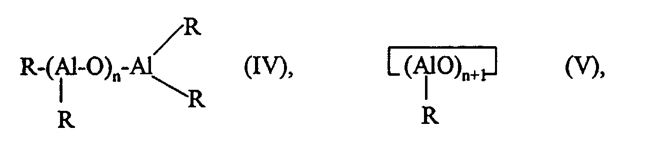 dans lesquelles
M représente un élément trivalent des terres rares de numéro atomique 57 à 71,
les symboles R, ayant des significations identiques ou différentes, représentent chacun un groupe alkyle en C₁ à C₂₀, et
n est un nombre allant de 1 à 50,
et
C) une matière solide minérale inerte à l'état de particules, à une surface spécifique supérieure à 10 m²/g (BET) et un volume de pores de 0,30 à 15 ml/g, le rapport molaire entre le composant A) et le composant B) allant de 1:1 à 1:50 000, et le composant A) étant mis en oeuvre en quantité de 0,1 mmol à 1 mol pour 100 g du composant C).

2. Catalyseur selon la revendication 1, caractérisé en ce qu'il contient en outre, en tant que composant D) un diène conjugué, en quantité de 0,1 à 100 mol pour 1 mol du composant A).

3. Procédé de préparation d'un catalyseur selon les revendications 1 et 2, caractérisé en ce que l'on mélange les composants A) à D) du catalyseur décrit dans les revendications 1 et 2, dans un ordre quelconque, dans un solvant et/ou diluant organique inerte à des températures de -20 à 80°C puis on sépare ensuite de manière appropriée le solvant et/ou diluant mis en oeuvre.

4. Utilisation du catalyseur selon les revendications 1 à 3 pour la polymérisation de diènes conjugués en phase gazeuse.
